# EUROPEAN PATENT APPLICATION

(11) **EP 3 614 683 A1**
(43) Date of publication of application: **26.02.2020**
(21) Application number: 18190870.8
(22) Date of filing: 25.08.2018
(51) Int. Cl.: H04N 21/482, H04N 21/43

(54) **A METHOD AND A SYSTEM FOR SETTING TIME OFFSETS OF EVENTS IN A PROGRAMME GUIDE**

(71) Applicant: Advanced Digital Broadcast S.A., 1262 Eysins (CH)
(72) Inventor: Polak, Michal, 65-119 Zielona Gora (PL)
(74) Representative: Kancelaria Eupatent.pl Sp. z.o.o

(57) **Abstract**

A method for setting time offsets of events (130, 131, 231, 241) of a service (120) in a programme guide with respect to associated content of the event, the method characterized in that it comprises the steps of: determining (305) an actual beginning time of an event (130, 131, 231, 241) by receiving from a user a request to pause content playback; determining (306) the event to which the beginning of the content refers to by receiving from a user indication of the event; calculating (307) an event time offset (eto) as an offset between the determined actual beginning time and the event start time for the determined event according to the program guide data; and applying (308) the calculated event time offset (eto) to the event start times for other events of the service (120).

## Description

### TECHNICAL FIELD

The present disclosure relates to a method and a system for setting time offsets of events in a programme guide.

### BACKGROUND

With the development of modern audio/video technologies, users of digital television systems can instantly access large amount of content at any given time from various sources.

A well-known method of presenting available content is a grid-type electronic programme guide (EPG) or interactive program guide (IPG), which typically has a timeline along its X axis and lists available channels on a Y axis, wherein programmes (events) available at a particular channel at a particular time i.e. current and future events as well as events in the past (catch-up events) are presented in cells within the grid. Usually it is assumed that an event start time is synchronized with that event content. Slight differences up to 2 minutes are acceptable, for example because of possible advertisement blocks embedded in content. However, it may happen that the actual content is not aligned to the EPG data, meaning that the start time of an event does not correspond to the beginning of that event associated content and is significantly shifted. This entails that an attempt to watch a catch-up event may result in playing that event content from its some later position, for example from the 20th minute of its duration, not from its beginning. Similarly, selecting an event from its beginning may cause that a part of the previous event is presented instead.

There are known solutions that enable a user to set a time margin for an event in the EPG display grid, for example 10 minutes margin, meaning that the event start time is virtually decreased by 10 minutes and its end time is virtually increased by another 10 minutes (the start and end margins may differ, e.g. 5 and 15 minutes). Still, such an approach is not optimal, as it does not guarantee that an event is actually played from its beginning and that the event end time covers that event content (it may happen that a significant part of a content of the next event is covered). This also means that the user may be irritated with a need of using trick modes (fast forward/backward) to move to the actual beginning of an event content. Furthermore, some devices may pause presenting the selected catch-up event content when its end (according to the EPG metadata, i.e. start time plus duration), is reached. Selecting manually the next event to continue watching of the previously chosen event is also inconvenient.

Therefore, there is a need to provide an alternative method and a system for setting time offsets for events presented in the EPG grid.

### SUMMARY

There is disclosed herein a method for setting time offsets of events of a service in a programme guide with respect to associated content of the event, the method characterized in that it comprises the steps of: determining an actual beginning time of an event by receiving from a user a request to pause content playback; determining the event to which the beginning of the content refers to by receiving from a user indication of the event; calculating an event time offset as an offset between the determined actual beginning time and the event start time for the determined event according to the program guide data; and applying the calculated event time offset to the event start times for other events of the service.

Preferably, the calculated event time offset value is applied only to a particular time range within the service.

Preferably, the method comprises specifying more than one event time offset value for a particular service.

There is also disclosed a computer program comprising program code means for performing all the steps of the computer-implemented method as described herein when said program is run on a computer, as well as a computer readable medium storing computer-executable instructions performing all the steps of the computer-implemented method as described herein when executed on a computer.

There is also disclosed a system for setting time offsets of events of a service in a programme guide with respect to associated content of the event, comprising modules configured to perform all the steps of the method of as described herein.

### BRIEF DESCRIPTION OF DRAWINGS

The method presented herein is presented by means of example embodiments on a drawing, wherein:
Fig. 1 presents an example of an EPG data display;
Fig. 2 presents an EPG data display in which EPG information about events do not correspond to their associated content;
Fig. 3 presents steps of a method for setting events time offset;
Fig. 4 presents an exemplary EPG data displaying events without and with applied time offset value;
Fig. 5 presents an example structure of a system for setting events time offset.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DETAILED DESCRIPTION

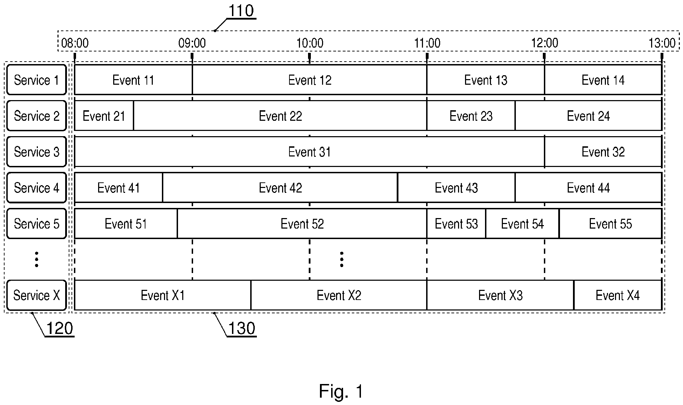

Fig. 1 presents an example of an EPG data display. EPG information can be presented by an STB (Set-Top-Box) or by a media player in a number of ways. For example as shown in Fig. 1 events (programmes) are presented inside an EPG grid - a grid-type electronic program guide having a timeline 110 along a horizontal X axis, wherein the events of a particular service 120 are presented in a horizontal row 130. The number of rows 130 corresponds to the number of services 120. Each event (Event 11, Event 12 ... Event X3, Event X4) is depicted by a rectangle wherein the length of its horizontal sides corresponds to the duration of the associated event while the left vertical side of the rectangle is placed at the position related to that event start time.

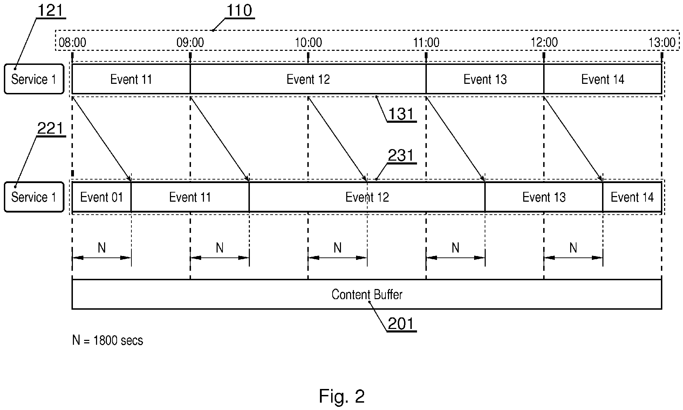

Fig. 2 presents an EPG data display in which EPG information concerning events do not correspond to their associated content. It may happen that the EPG information concerning events 131 (programmes) for one or more services 121 (channels) do not correspond to the content associated with that particular service. For example, every event 131 belonging to the same service 121, is moved by N seconds (e.g. 1800 seconds, i.e. 30 minutes) backward or forward with respect to the respective content, meaning that selecting such an event leads to playing it not from the beginning. To reach the beginning of the event content it is required to move the content by N seconds backward (if the event start time is ahead with respect to the associated content stored in a content buffer 201) or to move the content by N seconds forward (if the event start time is delayed with respect to the associated content stored in the content buffer 201), as presented in a row of events 231 for a service 221.

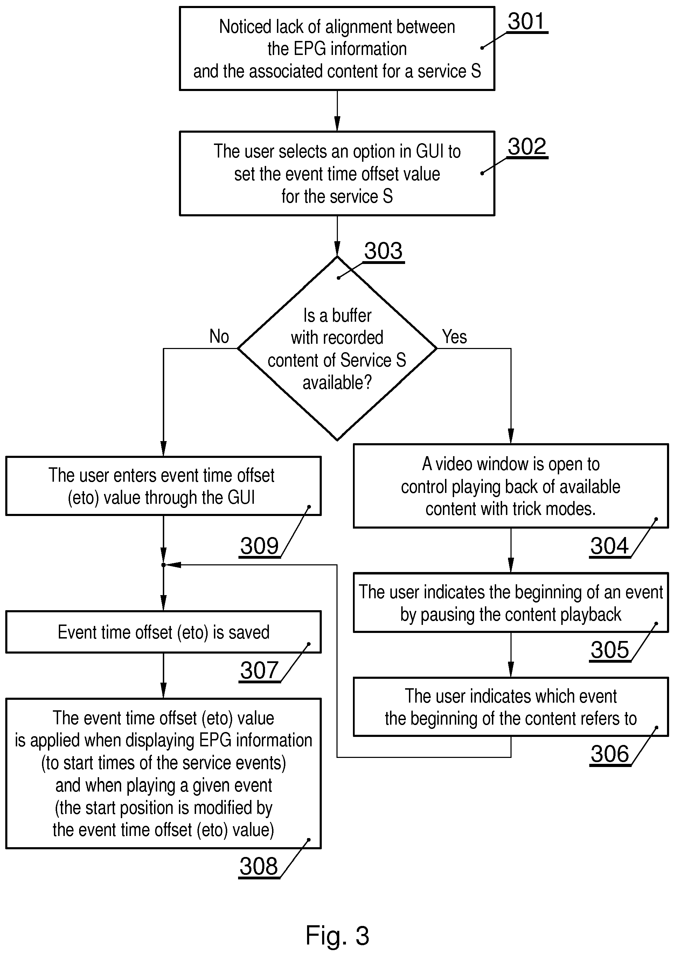

Fig. 3 presents steps of a method for setting events time offset. First, in step 301 a user notices that events belonging to a given service S do not commence according to their start times. In other words, the metadata (start time, duration, name, etc.) of the event being displayed by the GUI (EPG) on the screen do not correspond to the content (video, audio, subtitles,...) being presented after selecting the event for playback. This means that there is lack of alignment between the EPG information and the associated content for a particular service S. Next, in step 302 the user selects an option in GUI to set the event time offset value for the service S. As a result, the event time offset setting procedure is started. Next, in step 303 it is checked if a buffer with a recorded content of the service S is available. If so, then in step 304, for a recorded event (i.e. an event recorded locally at the user device or stored on content provider's head end mass storage) a video window is opened and the user by means of the trick mode keys of the remote control may navigate the video backward/forward until the beginning of the current event is found. Next, in step 305 the user indicates the actual beginning time of the event by pausing the content playback. Next, in step 306 the user indicates to which event the indicated beginning of the content refers to. For example, if a beginning of another event was found (instead of the selected one), the user indicates which event is the proper one. Subsequently in step 307 the event time offset (eto) is saved (e.g. having a value specified in seconds), as a negative or positive value indicating the offset from the actual event start time indicated in the EPG for that event. Next, in step 308, the event time offset (eto) value is applied when displaying EPG information and when playing a given event, to start times/positions of each event of the service S, by indicating the corrected event start time (cest, specified for example in UTC format) as a sum of the event start time (according to the EPG data) and the event time offset (eto). As a result of the modification, the start positions of the events displayed on the EPG correspond to the start positions of their associated content. The duration of the events remains the same and therefore their end times are also modified accordingly (the end time is shifted backward or forward by the same event time offset value). If in step 303 the buffer with the recorded content of the service S is not available, then the process moves to step 309, in which the user enters the event time offset value manually through the GUI basing on his observations. Next, the process moves directly to the step 307, to save the event time offset for further use.

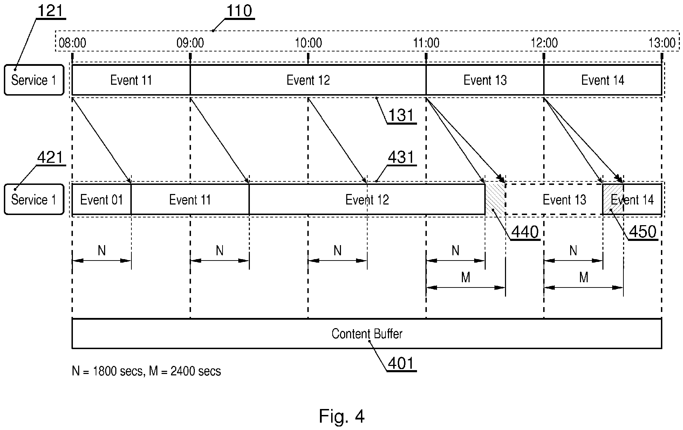

Fig. 4 presents an exemplary EPG data displaying events without and with the applied event time offset value. Originally, without the time offset, the events (Event 11-Event 14) of the service 121 are displayed as presented in the row 131. After the value of the time offset is applied, the events (Event 01-Event 14) of a service 421 are shifted accordingly as presented in a row 431 by the event time offset value. The event time offset value can be applied (set) for all EPG information available for the given service 421, or just for a specified time range of that service events. The time range may be specified by the user, for example as specifying a number of hours or a particular time of day. Moreover, more than one event time offset value (N, M) for the particular service may be specified, resulting in a corresponding number of ranges to be specified by the user. If the time ranges overlap, the last specified range is applied. In case of application of more than one event time offset value (N, M) holes 440 between the displayed events or overlapping 450 of the neighbouring events may occur in the EPG grid. More than one event time offset value is especially applicable for a catch-up (past) content that can be played from head-ends of huge capacity.

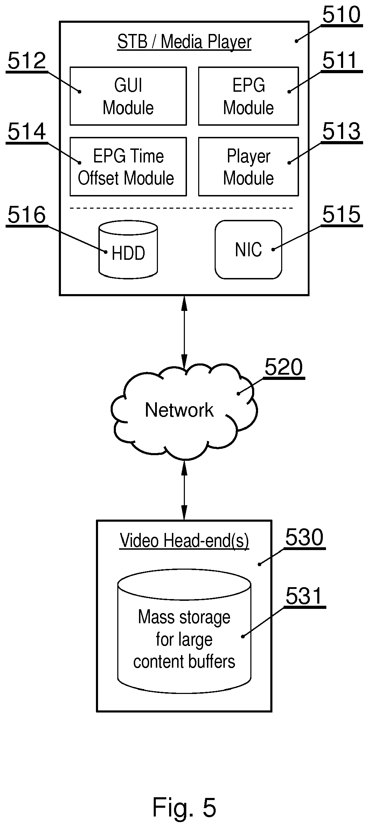

Fig. 5 presents an example of a structure of a system for setting event time offset. The system comprises an STB (Set-Top-Box) 510 which is connected to at least one video head-end 530 via a network 520. The video head-end has a mass storage for large content buffers 531 to store audio/video content.

The STB 510 comprises a plurality of modules configured to provide the functionality of the system as described herein in accordance with the method of Fig. 3. A GUI module 512 responsible for generating a graphical user interface. An EPG module 511 responsible for generating a grid-type electronic programme guide displaying the events. A player module 513 responsible for presenting an audio/video content. An EPG time offset module 514 responsible for application to the events, displayed by the EPG, of the specified event time offset values. A HDD 516 for storing video or other data locally at the STB. A Network Interface Card (NIC) 515 is configured to communicate with the IP network 520. All modules of the STB communicate with each other via one or more internal data buses.

The presented method and the system for setting time offsets of EPG events in case the content of a service is not aligned with respect to the EPG information, after applying an event time offset for the selected service, provides that a content (a live content, for example satellite, cable, terrestrial, IP or a content recorded locally on the STB) starts and ends according to the aligned EPG information. This means that the description of the content being presented by the STB (by means of the EPG) is valid and accurate and it refers exactly and only to the respective, associated event. Therefore the user does not have to use trick modes every time when he wants to watch the desired content in its full length. By once specifying the event time offset value for a particular service, all events of that service are properly aligned with their respective content.

At least parts of the methods according to the invention may be computer implemented. Accordingly, the present invention may take the form of an entirely hardware embodiment, an entirely software embodiment (including firmware, resident software, micro-code, etc.) or an embodiment combining software and hardware aspects that may all generally be referred to herein as a "circuit", "module" or "system".

Furthermore, the present invention may take the form of a computer program product embodied in any tangible medium of expression having computer usable program code embodied in the medium.

It can be easily recognized, by one skilled in the art, that the aforementioned method for setting time offsets of EPG events may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. A method for setting time offsets of events (130, 131, 231, 241) of a service (120) in a programme guide with respect to associated content of the event, the method **characterized in that** it comprises the steps of:
- determining (305) an actual beginning time of an event (130, 131, 231, 241) by receiving from a user a request to pause content playback;
- determining (306) the event to which the beginning of the content refers to by receiving from a user indication of the event;
- calculating (307) an event time offset (eto) as an offset between the determined actual beginning time and the event start time for the determined event according to the program guide data; and
- applying (308) the calculated event time offset (eto) to the event start times for other events of the service (120).

2. The method according to claim 1, wherein the calculated event time offset value (eto) is applied only to a particular time range within the service (121, 221, 421).

3. The method according to any of previous claims comprising specifying more than one event time offset value (eto) for a particular service.

4. A computer program comprising program code means for performing all the steps of the computer-implemented method according to any of claims 1-3 when said program is run on a computer.

5. A computer readable medium storing computer-executable instructions performing all the steps of the computer-implemented method according to any of claims 1-3 when executed on a computer.

6. A system for setting time offsets of events (130, 131, 231, 241) of a service (120) in a programme guide with respect to associated content of the event, comprising modules (511-516) configured to perform all the steps of the method of any of claims 1-3.
